# EUROPEAN PATENT APPLICATION

(11) **EP 3 920 046 A1**
(43) Date of publication of application: **08.12.2021**
(21) Application number: 20747831.4
(22) Date of filing: 22.01.2020
(51) Int. Cl.: G06F 16/48, G06F 16/907

(54) **INFORMATION PROCESSING SYSTEM, INFORMATION PROCESSING METHOD, AND INFORMATION PROCESSING DEVICE**

(30) Priority: 30.01.2019 JP 2019014436
(71) Applicant: Sony Group Corporation, 108-0075 Tokyo (JP)
(72) Inventor: NAGATA, Masaharu, Tokyo 108-0075 (JP); TOKITAKE, Miki, Tokyo 108-0075 (JP)
(74) Representative: 2SPL Patentanwälte PartG mbB
(86) International application number: PCT/JP2020/002101
(87) International publication number: WO 2020/158536

(57) **Abstract**

This information processing system includes: a first information processing unit including a first arithmetic unit that generates, from information regarding a detected user and behavior of the user, one or more pieces of tag information for content data of the user, and registers the generated one or more pieces of tag information in a content database in association with the content data; and a second information processing unit including a second arithmetic unit that selects the tag information on the basis of information detected from a content viewing environment including the user, retrieves and sequentially reproduces one or more pieces of the content data on the basis of the selected tag information, and updates the tag information used for retrieving the content data in accordance with a change in the information detected from the content viewing environment.

## Description

### Technical Field

The present technology relates to an information processing apparatus, an information processing method, and an information processing system that are for managing, retrieving, and reproducing content data with tags.

### Background Art

In recent years, there has been known a system in which a large amount of content data such as image files including moving images and photographs and sound files is stored in storage, and files are selectively read from the storage to be continuously reproduced like a slide show.

For example, Patent Literature 1 discloses a technique of recording, as a tag, a keyword in the details of user's utterance for each photograph to enhance retrieval performance using the keyword.

Patent Literature 2 discloses a technique of giving a query sentence to a user, extracting a keyword from a user's answer sentence for the query sentence, and using the keyword as information for retrieving content.

### Citation List

### Patent Literature

Patent Literature 1: Japanese Patent Application Laid-open No. 2010-224715
Patent Literature 2: Japanese Patent Application Laid-open No. 2013-54417

### Disclosure of Invention

### Technical Problem

However, the content data management and retrieval systems known so far including the techniques disclosed in the above-mentioned publications are excellent in retrieval performance for content data required by users, whereas there is room for various improvements, for example, due to being insufficient to cause a user to unexpectedly bring back memories that the user is forgetting, or requiring an intentional action from a user for retrieval.

In view of the above circumstances, it is an object of the present technology to provide an information processing system, an information processing method, and an information processing apparatus that are capable of reducing the burden on a user from registration to retrieval and browsing of content data with tags, and capable of presenting a new form of slide show including content data that is relevant to user's memories and also has an element of surprise.

### Solution to Problem

In order to solve the above problems, an information processing system according to the present technology includes: a first information processing unit including a first arithmetic unit that generates, from information regarding a detected user and behavior of the user, one or more pieces of tag information for content data of the user, and registers the generated one or more pieces of tag information in a content database in association with the content data; and a second information processing unit including a second arithmetic unit that selects the tag information on the basis of information detected from a content viewing environment including the user, retrieves and sequentially reproduces one or more pieces of the content data on the basis of the selected tag information, and updates the tag information used for retrieving the content data in accordance with a change in the information detected from the content viewing environment.

According to the information processing system of the present technology, the first arithmetic unit of the first information processing unit generates tag information to be associated with content data from information regarding a detected user and behavior of the user, and the second arithmetic unit of the second information processing unit selects tag information on the basis of information detected from the viewing environment for the content data including the user, and retrieves and sequentially reproduces one or more pieces of the content data on the basis of the selected tag information. As a result, the content data with a tag is registered and then retrieved and reproduced without explicitly specifying the tag information by the user, and the burden on the user is reduced. Further, the second arithmetic unit of the second information processing unit updates the tag information used for retrieving the content data in accordance with the change of the information detection from the viewing environment. This allows the user to switch to reproduction of a series of content data with varied relevance without explicitly specifying the tag information. As a result, content data unexpected for the user can be presented, and the user can be given an opportunity to unexpectedly bring back memories that the user is forgetting.

The information regarding the detected user and the behavior of the user and the information detected from the content data viewing environment may be person information recognized from a captured image including the user and emotion information estimated from a facial expression of the person.

The information regarding the detected user and the behavior of the user and the information detected from the content data viewing environment may be keywords extracted from details of utterance of the user.

The second arithmetic unit of the second information processing unit may sequentially reproduce one or more pieces of the content data when detecting that the user is present in the content viewing environment. At that time, the second arithmetic unit of the second information processing unit may randomly select and sequentially reproduce one or more pieces of the content data.

The second arithmetic unit of the second information processing unit may be configured to update the tag information used for retrieving the content data in accordance with a change of the user in the content viewing environment or a change of a combination of users.

The second arithmetic unit of the second information processing unit may be configured to update the tag information with a name of a user after the change of the content viewing environment.

The second arithmetic unit of the second information processing unit may be configured to update the tag information used for retrieving the content data in accordance with a change of a facial expression of the user in the content viewing environment.

The second arithmetic unit of the second information processing unit may be configured to update the tag information with emotion information estimated from the facial expression of the user after the change.

The second arithmetic unit of the second information processing unit may also be configured to update the tag information used for retrieving the content data in accordance with a change in magnitude and speed of a motion of the user in the content viewing environment.

The second arithmetic unit of the second information processing unit may be configured to update the tag information used for retrieving the content data in accordance with a keyword extracted from utterance of the user in the content viewing environment.

The second arithmetic unit of the second information processing unit may be configured to add, to the content database, a new keyword extracted from utterance of the user in the content viewing environment as new tag information for the content data being presented.

The second arithmetic unit of the second information processing unit may be configured to receive a speech command from the user in the content viewing environment, recognize the user, sequentially reproduce one or more pieces of the content data associated with schedule information of the user and person information identifying the user, convert a feedback speech from the user into text data, and store the text data as diary data.

### Brief Description of Drawings

[Fig. 1] Fig. 1 is a block diagram showing a configuration of an information processing system 1 according to a first embodiment of the present technology.
[Fig. 2] Fig. 2 is a diagram showing the relationship between content data and tag information.
[Fig. 3] Fig. 3 is a block diagram showing functional configurations of an information terminal 10 and a content database generating apparatus 100 in a content database generation environment.
[Fig. 4] Fig. 4 is a block diagram showing a functional configuration of a content reproducing apparatus 200.
[Fig. 5] Fig. 5 is a flowchart of the operation of the content reproducing apparatus 200.
[Fig. 6] Fig. 6 is a diagram showing meta-information groups for each piece of content data stored in a content DB 20, which is classified by date and time and emotion.
[Fig. 7] Fig. 7 is a diagram showing an example of encapsulation of the content data by using the tag information of date and time.
[Fig. 8] Fig. 8 is a diagram showing an example of encapsulation of the content data by using the tag information of emotion.
[Fig. 9] Fig. 9 is a diagram showing an example of encapsulation of the content data by using the tag information of Mom.
[Fig. 10] Fig. 10 is a diagram showing an example of encapsulation of the content data by using the tag information of emotion (joyful).
[Fig. 11] Fig. 11 is a block diagram showing a configuration of an information processing apparatus 1A according to the present technology.

### Mode(s) for Carrying Out the Invention

An embodiment of the present technology will be described below with reference to the drawings.

### <First Embodiment>

### [Information Processing System]

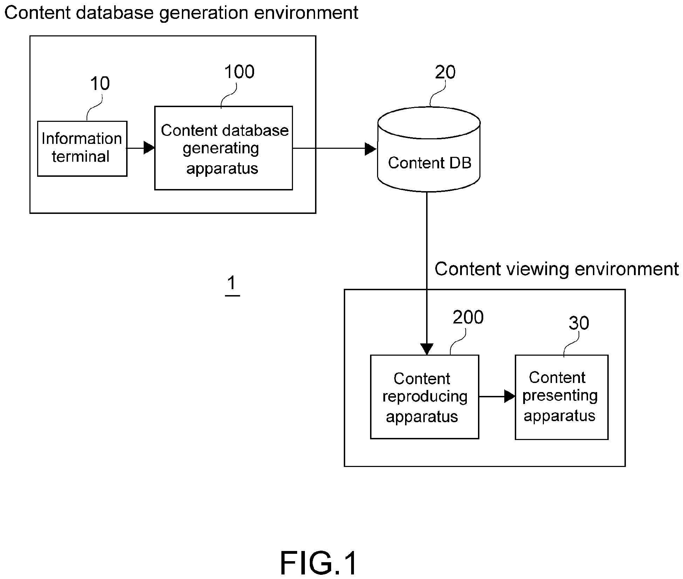

Fig. 1 is a block diagram showing a configuration of an information processing system 1 of this embodiment.

The information processing system 1 includes an information terminal 10 of a user, a content database generating apparatus 100 that is a first information processing unit, a content database (content DB) 20, a content reproducing apparatus 200 that is a second information processing unit, and a content presenting apparatus 30. The information terminal 10 of the user and the content database generating apparatus 100, which is the first information processing unit, are in a content database generation environment. The content database generation environment is a place where user's content data such as moving images and photographs is captured. The content reproducing apparatus 200 and the content presenting apparatus 30 are in a place where the user can view the content data, for example, the user's home, a car, and so on.

The content database generating apparatus 100 and the content reproducing apparatus 200 may be independent information processing apparatuses, or may be a single information processing apparatus. Each of the content database generating apparatus 100 and the content reproducing apparatus 200 has a CPU that is an arithmetic processing unit of an information processing apparatus, a memory, a storage device, and various interfaces. The memory or storage device stores programs that are to be executed by the CPU.

Note that at least one of the content database generating apparatus 100 or the content reproducing apparatus 200 may be provided by cloud computing. Therefore, at least one of the first information processing apparatus or the second information processing apparatus may be a server apparatus for providing a service on the Internet.

The content database generating apparatus 100 detects a user and the behavior of the user, generates one or more pieces of tag information related to the content data of the user from the detection result, and registers the one or more pieces of tag information in the content DB 20 in association with the content data.

On the basis of the tag information registered in the content DB 20, the content reproducing apparatus 200 collects one or more pieces of content data related to each other to form one capsule, and sequentially reproduces those pieces of content data.

Here, the content data is data that can be visually or audibly presented to the user and mainly includes at least any one of image data such as moving images and still images (photographs), speech data, text data, or HTML data.

The tag information is information related to content data. In the present technology, the tag information is used as a condition for retrieving one or more pieces of content data to be continuously reproduced among a plurality of pieces of content data.

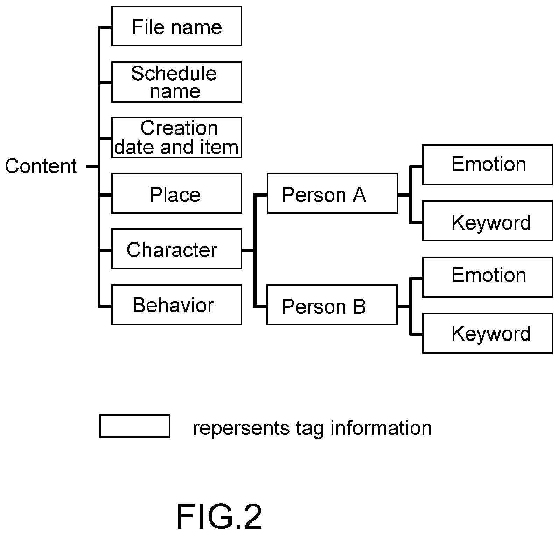

Fig. 2 is a diagram showing a relationship between the content data and the tag information. The tag information includes a file name of the content data, a schedule name, a date and time, a place, a person, behavior, etc. The tag information of a person includes the name of the person, an emotion, a keyword spoken by the person, and the like. The schedule name is information extracted from schedule information related to the content data. The date and time is the creation date and time of the content data. If the content data is a moving image or photograph, the date and time is the recording date and time. If the content data is a speech, the date and time is the date and time at which the speech is obtained and converted into a file. The place indicates a specific place calculated on the basis of the schedule information related to the content data and location information of the user. The character is a person related to the content data, such as a person as a subject in the image, a person estimated as a speaker of the speech data by speech analysis or the like, or a person talked about in the conversation. The emotion is information identified from a facial expression by analyzing a facial image, or the like. For example, the emotion is classified into types such as "joyful", "delicious", and "sad". The keyword is a keyword extracted from the speech of the person's utterance, etc. The behavior is behavior of the user when the content data is obtained, and is classified into, for example, "walking", "moving by car", "stopping", and the like.

A capsule is information defining a group of one or more pieces of content data having some common tag information. For example, assuming that three photographs F1, F2, and F3 exist as content data, the photograph F1 includes a person A and a person B as subjects, the photograph F2 includes the person A only as a subject, and the photograph F3 includes the person B only as a subject, when the person A is tag information, the photograph F1 and the photograph F2 are defined as one capsule. The one or more pieces of content data thus encapsulated are determined on the basis of the tag information, and thus the one or more pieces of content data having some relevance are collected to form one capsule.

Next, a configuration of the content database generating apparatus 100 in the information processing system 1 according to this embodiment will be described.

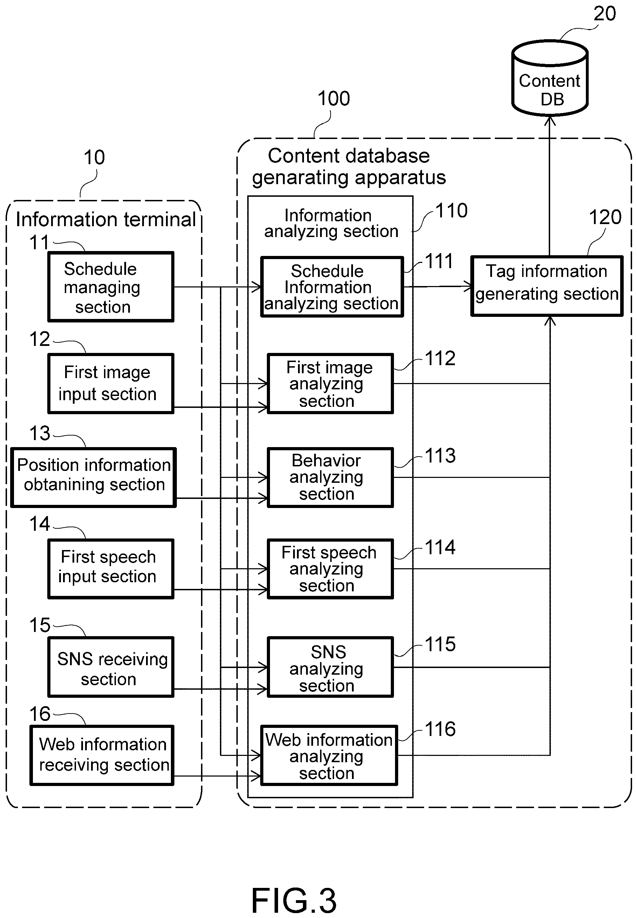

Fig. 3 is a block diagram showing functional configurations of the information terminal 10 and the content database generating apparatus 100 in the content database generation environment.

The content database generating apparatus 100 includes an information analyzing section 110 and a tag information generating section 120. The information analyzing section 110 communicates with the information terminal 10 of the user to obtain and analyze various types of information for detecting a user and the behavior of the user.

The tag information generating section 120 generates tag information, which is information related to content data, from the resolution result obtained by the information analyzing section 110, and registers the tag information in the content DB 20 in association with the content data.

The information terminal 10 includes a schedule managing section 11, a first image input section 12, a position information obtaining section 13, a first speech input section 14, an SNS receiving section 15, and a web information receiving section 16 as means for obtaining information necessary for detecting a user and behavior of the user.

The schedule managing section 11 manages the schedule information of the user. The schedule information of the user includes information such as a date and time, a schedule name, a place, and an accompanying person.

The first image input section 12 converts an image, such as a moving image or a photograph taken in using a camera, into data, and creates an image file by adding header information such as a shooting date and time.

The position information obtaining section 13 obtains user's position information from detection information of a global navigation satellite system (GNSS), a geomagnetic sensor, an acceleration sensor, or the like.

The first speech input section 14 converts a speech input using a microphone into data and generates a speech file by adding header information such as a date and time.

The SNS receiving section 15 receives SNS posted details (utterance, image, etc.) by the user or friends.

The web information receiving section 16 accesses various information sites on the Internet to receive web information such as news information, weather information, and traffic congestion information.

Note that the information obtained by the information terminal 10 is not limited to the above.

For example, other data of various applications, such as e-mail and memos, may be obtained and provided to the content database generating apparatus 100.

### (Configuration of Information Analyzing Section 110)

The information analyzing section 110 in the content database generating apparatus 100 includes a schedule information analyzing section 111, a first image analyzing section 112, a behavior analyzing section 113, a first speech analyzing section 114, an SNS analyzing section 115, and a web information analyzing section 116.

The schedule information analyzing section 111 analyzes the schedule information managed by the schedule managing section 11, and extracts information such as a date and time, a schedule name, a place, and an accompanying person.

The first image analyzing section 112 recognizes a person who exists as a subject in the image data input by the first image input section 12, an object other than a person, a landscape, or the like, and estimates an emotion from a facial expression of a person. In addition, the first image analyzing section 112 is also capable of performing behavior recognition on the basis of the recognition result of a person and the recognition result of an object. For example, if a person XX and a coffee cup are recognized, the behavior that the person XX is drinking a cup of coffee is recognized.

The behavior analyzing section 113 calculates the movement speed of the user on the basis of the position information obtained by the position information obtaining section 13 periodically, for example, at every n-second intervals, and classifies, on the basis of the result, the behavior of the user into walking, moving by car, stopping, and the like. The n seconds may be a fixed value such as 10 seconds or may be a variable value set by the user or the like.

The first speech analyzing section 114 analyzes the speech data input by the first speech input section 14, and estimates a person who is a speaker included in the speech or extracts a keyword included in the details of the utterance.

The SNS analyzing section 115 analyses the SNS posted details received by the SNS receiving section 15, and extracts images, keywords, and the like included in the SNS posted details.

The web information analyzing section 116 obtains the web information such as news, weather information, and traffic congestion information related to the date and time and place of the schedule information, the position information of the user, and the like by using the web information receiving section 16.

### (Operation Example of Content Database Generating Apparatus 100)

In the content database generating apparatus 100, the schedule information analyzing section 111 obtains the schedule information of a current day from the schedule managing section 11, and extracts a schedule name, a behavior period, an accompanying person, and the like of the obtained schedule information. For example, if "play in an amusement park x with my family whole day" is registered as the schedule information of the current day (October 1), the schedule information analyzing section 111 extracts the schedule name = amusement park x, the behavior period = October 1 whole day, and the accompanying person = family.

In response to the results, the content database generating apparatus 100 operates as a target period for detecting the behavior of the user on the whole day (October 1). In this target period, image analysis, behavior analysis, speech analysis, web information analysis, and the like are performed, for example, at every set time, at every set time interval, or at the timing when image data or speech data is obtained by the information terminal 10, and the results are supplied to the tag information generating section 120.

The tag information generating section 120 generates tag information from each analysis result of the information analyzing section 110.

For example, the tag information generating section 120 extracts, as tag information, information such as a schedule name, a place, and an accompanying person obtained by the schedule information analyzing section 111. In addition, the tag information generating section 120 extracts, as tag information, a person obtained by the first image analyzing section 112, an estimation result of the emotion of the person, and the like. Further, the tag information generating section 120 assumes that traffic congestion occurs when the user stops on the road for a long time by the behavior analyzing section 113, and generates the keyword = traffic congestion as tag information. Further, the tag information generating section 120 extracts, as tag information, a person as a speaker analyzed by the first speech analyzing section 114, a keyword extracted from a speech, and the like. Further, the tag information generating section 120 extracts, as tag information, HTML file names of web information such as news, weather information, and traffic congestion information obtained by the web information analyzing section 116.

For example, when the user takes a photograph of the family in a car, the tag information generating section 120 generates the following tag information from the information obtained from the information analyzing section 110, and registers the tag information in the content DB 20 in association with the photograph data.
- Photograph file name: DSC00001.JPG
- Schedule name: amusement park x
- Shooting date and time: October 1, 2018, AM 8:15
- Place: near XY interchange
- Person: mom (emotion: joyful)
- Behavior: moving by car

Note that the file name may include a path indicating the location of the file.

Further, when the utterance such as "It is a great traffic congestion" is detected at the same time as shooting, the speech data thereof is analyzed by the first speech analyzing section 114, and a speaking person and a keyword such as "traffic congestion" are extracted. As a result, the speaking person = mom and the keyword = traffic congestion are added to the tag information by the tag information generating section 120.

Note that the speech input by the first speech input section 14 may be constantly performed in a predetermined period, and when utterance by a specific person is detected, when a specific keyword is detected by the first speech analyzing section 114, or when both cases are established, the speech data input at a predetermined time before and after the detection may be analyzed.

### (Dara Registration in Content DB 20 from SNS posted Details)

Next, a specific example of an operation of generating content data and tag information from the SNS posted details and registering them in the content DB 20 will be described.

It is assumed that the user takes a photograph of the dish that the user ordered at a restaurant yy in an amusement park x and posts the photograph data and a comment "Hamburger steak is delicious." on SNS, and a new post saying "Pork saute is also delicious." from a friend occurs in response to the user's post.

The tag information generating section 120 of the content database generating apparatus 100 obtains a series of posted details of the user and the friend by the SNS receiving section 15 of the information terminal 10, analyses these posted details by the SNS analyzing section 115 to extract the photograph data and keywords, and registers the photograph data in the content DB 20 in association with the following tag information.
- Photograph file name: DSC00050.JPG
- Schedule name: amusement park x
- Shooting date and time: October 1, AM 12:30
- Place: restaurant yy
- Person : daughter (keyword: hamburger steak, delicious)
- Person: friend of daughter (keyword: pork saute, delicious)

### (Configuration of Content Reproducing Apparatus 200)

Next, a configuration of the content reproducing apparatus 200 in a content viewing environment will be described.

The content reproducing apparatus 200 detects information of the content viewing environment including the user and retrieves and sequentially reproduces one or more pieces of content data on the basis of the detected information.

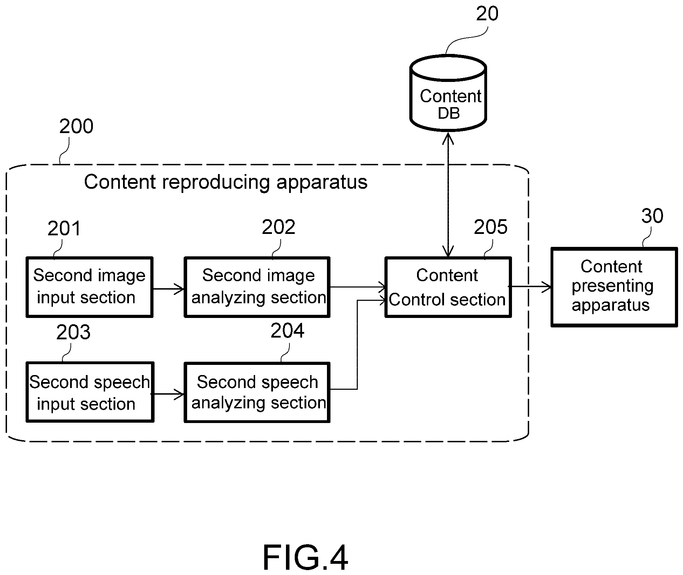

Fig. 4 is a block diagram showing a functional configuration of the content reproducing apparatus 200.

The content reproducing apparatus 200 includes a second image input section 201, a second image analyzing section 202, a second speech input section 203, and a second speech analyzing section 204 as means for detecting the information of the content viewing environment including the user. Further, the content reproducing apparatus 200 includes, for example, a content control section 205 that performs control to select tag information on the basis of the detected information, and retrieve and sequentially reproduce one or more pieces of content data on the basis of the selected tag information.

The second image input section 201 inputs an image of the content viewing environment captured using a camera, converts the image into data, and outputs the data to the second image analyzing section 202. The second image input section 201 is, for example, a fixed-point observation camera installed in a room.

The second image analyzing section 202 recognizes a person as a subject from the image data input by the second image input section 201, estimates an emotion from a face expression of the person, and outputs these results to the content control section 205.

The second speech input section 203 captures the speech in the content viewing environment using a microphone, converts the speech into data, and outputs the data to the second speech analyzing section 204.

The second speech analyzing section 204 analyzes the speech data input by the second speech input section 203, estimates a person who is a speaker included in the speech, extracts a keyword included in the details of the utterance, and supplies these results to the content control section 205.

The content control section 205 determines tag information for encapsulation on the basis of the analysis results obtained by the second image analyzing section 202 and the second speech analyzing section 204, determines one or more pieces of content data to be encapsulated by searching the content DB 20 on the basis of the determined tag information, sequentially reproduces these pieces of content data, and outputs these pieces of content data to the content presenting apparatus 30.

The content presenting apparatus 30 displays the content data reproduced by the content reproducing apparatus 200 and outputs sound. The content presenting apparatus 30 may be a television, a monitor connected to a personal computer, a projector, or the like. Alternatively, the content presenting apparatus 30 may be a smart phone, a tablet terminal, or a digital photo frame.

### (Operation of Content Reproducing Apparatus 200)

Next, the operation of the content reproducing apparatus 200 will be described.

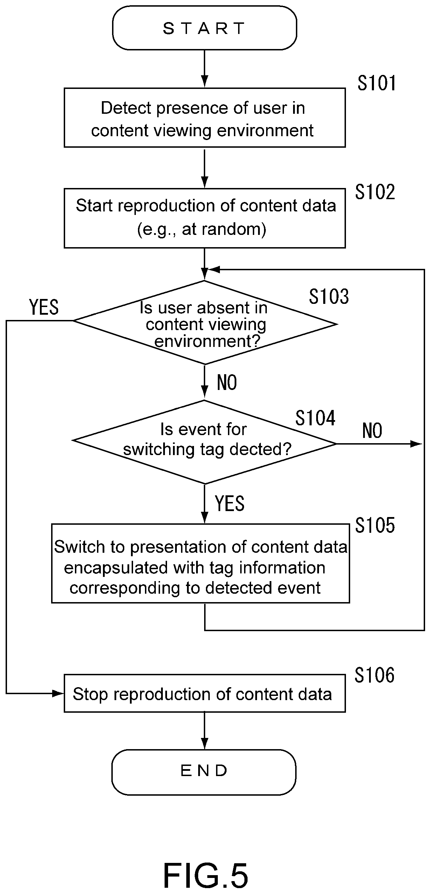

Fig. 5 is a flowchart of the operation of the content reproducing apparatus 200.

For example, when the presence of a user in a content viewing environment such as a home is detected by image analysis by the second image analyzing section 202 or detected by speech analysis by the second speech analyzing section 204 (Step S101), the content control section 205 starts to continuously read and reproduce one or more pieces of content data from the content DB 20, and to present the content data to the content presenting apparatus 30 like a slide show (Step S102). Note that the content data is not necessarily stored only in the content DB 20. Content data stored in other databases may be read and reproduced.

At this time, the content data to be presented may be one or more pieces of content data encapsulated by tag information arbitrarily determined in advance, or may be content data randomly read from the content DB 20. Alternatively, if the user's schedule information or its copy information is stored in the content DB 20, one or more pieces of content data encapsulated using a recently completed schedule name as the tag information may be read and reproduced on the basis of the schedule information. Alternatively, one or more pieces of content data encapsulated using a schedule name completed a predetermined number of days earlier (e.g., one month, six months, one year earlier, etc.) as tag information may be read and reproduced. Alternatively, using a user recognized by the image analysis by the second image analyzing section 202 as tag information, content data including the user as the character may be encapsulated and reproduced.

Further, it is possible for the user to directly specify the tag information of content data to be viewed with respect to the content reproducing apparatus 200 through a speech or the like.

For example, the tag information of content data to be reproduced may be determined on the basis of keywords extracted from the utterance of the user, such as "Show a photograph of the amusement park x," "Show fun memories," and "Show delicious memories".

During the presentation of the content data, the content control section 205 detects an event for switching the tag information of content data to be reproduced from an image analysis result, a speech analysis result, and the like (Step S104). For example, the content control section 205 assumes that an event occurs when the following analysis results are obtained.
1. Change of user and change of combination of users in content viewing environment
2. Change of user to specific facial expression (specific emotion)
3. Change in user's behavior
4. Keywords included in user's utterance

### Detection of Event 1

When the user in the content viewing environment changes or the combination of users changes, the content control section 205 switches to, for example, presentation of a capsule in which one or more pieces of content data including a changed user or a newly added user as tag information are collected (Step S105). Thus, the presentation is switched to presentation of one or more pieces of content data related to the user or user group in the content viewing environment, so that it is possible to expect that the atmosphere of the content viewing environment becomes lively.

### Detection of Event 2

For example, when the user's emotion changes to, for example, "joyful" (facial expression is smile), the content control section 205 switches to the presentation of one or more pieces of content data encapsulated again on the basis of the tag information of (emotion: joyful) (Step S105). As a result, it is possible to expect that the user's feeling of fun is further excited.

### Detection of Event 3

For example, when detecting a change in the user's behavior, such as an increase in magnitude or speed of the motion of the user, the content control section 205 switches to the presentation of one or more pieces of content data encapsulated with tag information of keywords having positive meanings, such as "Congratulations!" and "Great!" (Step S105).

### Detection of Event 4

The content control section 205 switches to the presentation of one or more pieces of content data encapsulated again using, as tag information, keywords extracted from the utterance of the user who is viewing the content (Step S105).

Further, the content control section 205 adds a new keyword extracted from the utterance of the user who is viewing the content to the content DB 20 as new tag information for the content data being presented. For example, it is assumed that photograph data of dishes transported one after another in a restaurant is registered as content data in the content data together with tag information. If the user says, "This dish was delicious." while presenting the photograph data of the dish, the content control section 205 adds a keyword extracted from the details of the utterance by the second speech analyzing section 204, for example, a keyword "delicious", to the content DB 20 as new tag information of the photograph data. As described above, when new tag information is added to the content DB 20, the degree of richness of the tag information of the content DB 20 can be increased, and a variety of slide shows can be presented.

Further, the content control section 205 receives a command from the user in the content viewing environment, which directly specifies tag information related to the content data to be viewed, and sequentially presents one or more pieces of content data encapsulated with the tag information. For example, it is assumed that a plurality of users is watching a program related to an amusement park x by television broadcasting, and one of the users says "I want to go to this amusement park x." The second speech analyzing section 204 extracts a keyword "amusement park x" from the speech data of the utterance input through the second speech input section 203, and supplies it to the content control section 205. The content control section 205 then sequentially presents one or more pieces of content data related to the amusement park x.

In addition, when the photograph of the traffic congestion, which was taken while the user was moving to the amusement park x, is included in the presentation of one or more pieces of content data related to the amusement park x, and thus any user says "Show the road traffic information at that time", the content control section 205 reads the traffic congestion information at that time stored in the content DB 20 in association with the content data on the basis of the keyword "traffic information" obtained by the second speech analyzing section 204, and presents the read traffic congestion information to the content presenting apparatus 30. The user can use the traffic congestion information as reference information for determining a traffic route, a departure time, and the like when the user goes to the amusement park x next time.

The above presentation of the content data by the content reproducing apparatus 200 is stopped by detecting that the user is absent in the content viewing environment (YES in Step S103) (Step S106).

Note that the input of a command from the user to the content reproducing apparatus 200 can be performed by a method other than a speech input. For example, a gesture input by image analysis, an input using a menu displayed on the content presenting apparatus 30, or the like may be used.

### (Diary Function)

The content reproducing apparatus 200 has a diary function for the user.

For example, when the user says "write diary" to the content reproducing apparatus 200, the user is identified by at least one of face recognition processing based on an image by the second image analyzing section 202 or speech analysis by the second speech analyzing section 204, and a diary function for the user is activated.

The content control section 205 reads the schedule information of the current day of the identified user from the content DB 20 and displays the schedule information on the content presenting apparatus 30. Here, it is assumed that "play in the amusement park x" is scheduled as the schedule information of the current day, for example. The content control section 205 collects one or more pieces of content data to form one capsule by using the date and time of the current day and the user name as tag information, and sequentially presents the one or more pieces of content data to the content presenting apparatus 30.

When the user says some feedback to the presented content data while viewing the content data, the second speech analyzing section 204 recognizes the speech data of the user taken in by the second speech input section 203 and generates text data of the details of the utterance. The content control section 205 stores the generated text data as a diary sentence on the current day in the content DB 20 in association with tag information such as a recording date, a recorder, and a keyword in the details of the utterance.

### (Specific Examples of Encapsulation of Content Data)

Next, specific examples of encapsulation of content data will be described.

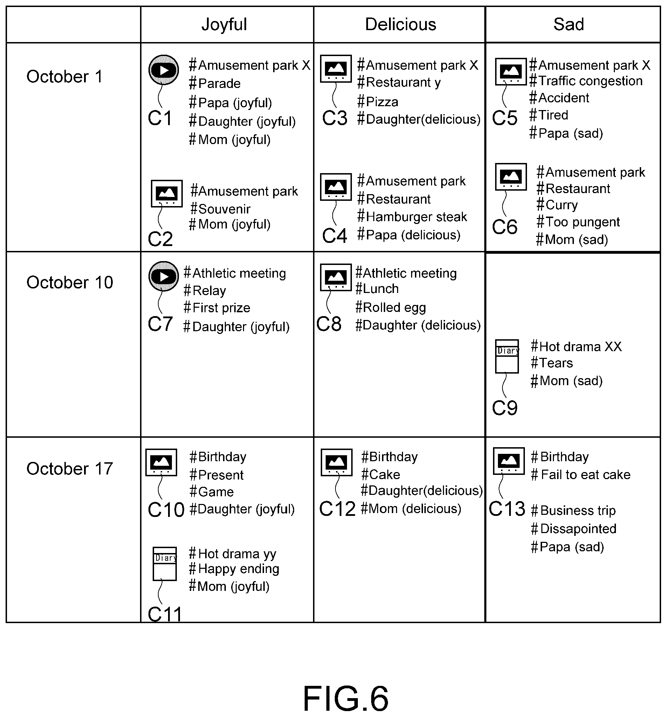

Fig. 6 is a diagram showing meta-information groups for each piece of content data stored in the content DB 20, which are classified by date and time and emotion.

There are a total of 13 meta-information groups of content data C1 to C13. The content data C1 and C7 are moving images, the content data C2 to C6, C8, C10, C12 and C13 are photographs, and the content data C9 and C11 are diary data.

The content data C1 is associated with (date and time: October 1, 2017), (reservation name: amusement park x), (person: papa), (person: mom), (person: daughter), and (emotion: joyful) for each person as tag information.

The content data C2 is associated with (date and time: October 1, 2017), (reservation name: amusement park x), (person: mom), and (emotion: joyful) as tag information.

The content data C3 is associated with (date and time: October 1, 2017), (reservation name: amusement park x), (place: restaurant y), (person: daughter), (keyword: pizza), and (emotion: delicious) as tag information. Here, (emotion: delicious) is the result determined on the basis of the analysis of the facial expression of a person and (location: restaurant y). The same applies to the emotion tags of the content data C4, C8, and C12.

The content data C4 is associated with (date and time: October 1, 2017), (reservation name: amusement park x), (place: restaurant y), (person: papa), (keyword: hamburger steak), and (emotion: delicious) as tag information.

The content data C5 is associated with (date and time: October 1, 2017), (reservation name: amusement park x), (person: papa), (keyword: traffic congestion), (keyword: accident), (keyword: tired), and (emotion: sad) as tag information.

The content data C6 is associated with (date and time: October 1, 2017), (reservation name: amusement park x), (place: restaurant y), (person: mom), (keyword: curry), (keyword: too pungent), and (emotion: sad) as tag information.

The content data C7 is associated with (date and time: October 10, 2017), (reservation name: athletic meeting), (person: daughter), (keyword: relay), (keyword: first prize), and (emotion: joyful) as tag information.

The content data C8 is associated with (date and time: October 10, 2017), (reservation name: athletic meeting), (person: daughter), (keyword: lunch), (keyword: rolled egg), and (emotion: delicious) as tag information.

The content data C9 is associated with (date and time: October 10, 2017), (keyword: hot drama name zz), (keyword: tears), (person: mom), and (emotion: sad) as tag information.

The content data C10 is associated with (date and time: October 17, 2017), (reservation name: birthday), (keyword: present), (keyword: game), (person: daughter), and (emotion: joyful) as tag information.

The content data C11 is associated with (date and time: October 17, 2017), (keyword: hot drama yy), (keyword: happy ending), (person: mom), and (emotion: joyful) as tag information.

The content data C12 is associated with (date and time: October 17, 2017), (reservation name: birthday), (keyword: cake), (person: daughter), and (emotion: delicious) as tag information.

The content data C13 is associated with (date and time: October 17, 2017), (reservation name: birthday), (keyword: fail to eat cake), (keyword: business trip), (keyword: disappointed), (person: papa), and (emotion: sad) as tag information.

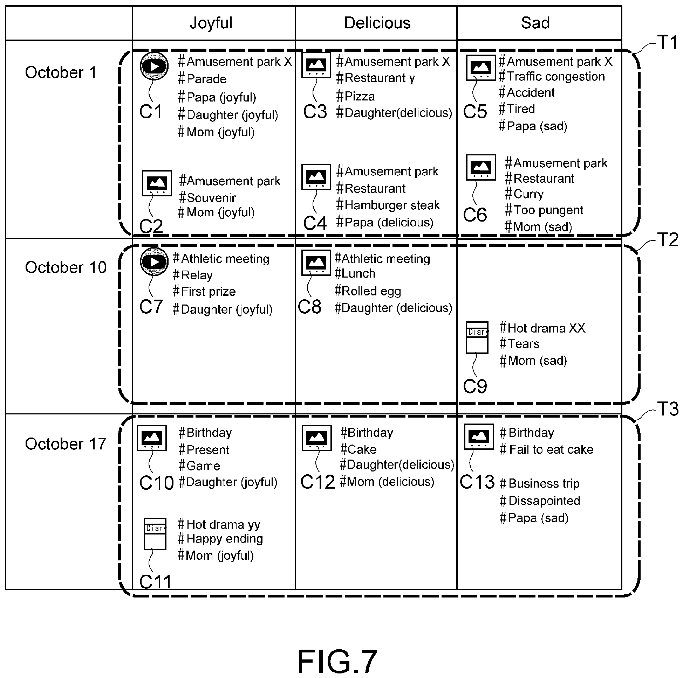

Here, when (date and time: October 1, 2017) is selected as the tag information for encapsulation, as shown in Fig. 7, a capsule T1 in which the content data C1 to C6 are collected is generated, and these pieces of content data C1 to C6 are presented to the content presenting apparatus 30 while being sequentially switched like a slide show. The order of presentation may be the order of the date and time of the content data or may be random.

Similarly, when the other dates and times are selected as tag information for encapsulation, a capsule T2 in which the content data C7 to C9 are collected and a capsule T3 in which the content data C10 to C13 are collected are generated.

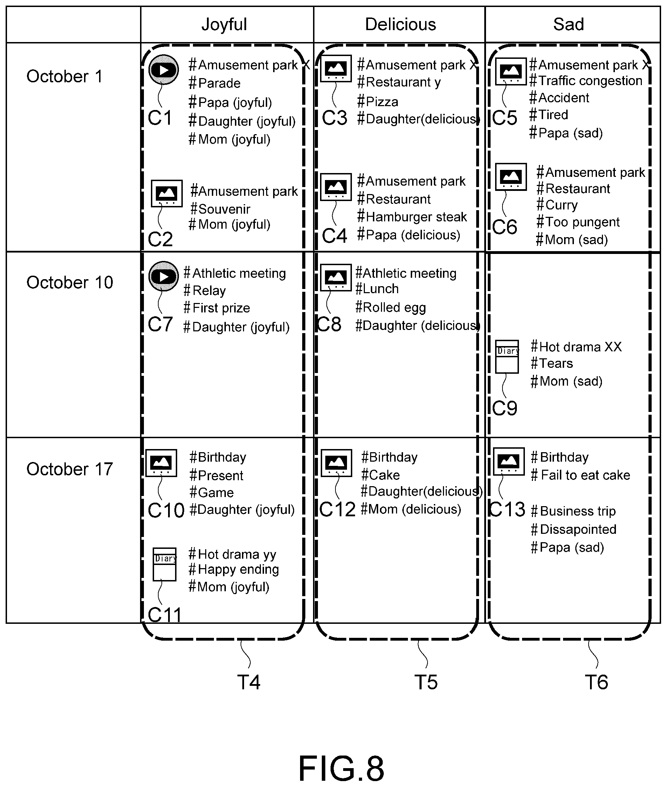

In addition, when (emotion: joyful) is selected as the tag information for encapsulation, as shown in Fig. 8, a capsule T4 in which the content data C1, C2, C7, C10, and C11 are collected is generated, and these pieces of content data C1, C2, C7, C10, and C11 are sequentially presented. In this case as well, the order of presentation may be the order of the date and time or may be random.

Similarly, when the other emotions (delicious, sad) are selected as the tag information for encapsulation, a capsule T5 in which the content data C3, C4, C8, and C12 are collected and a capsule T6 in which the content data C5, C6, C9, and C13 are collected are generated.

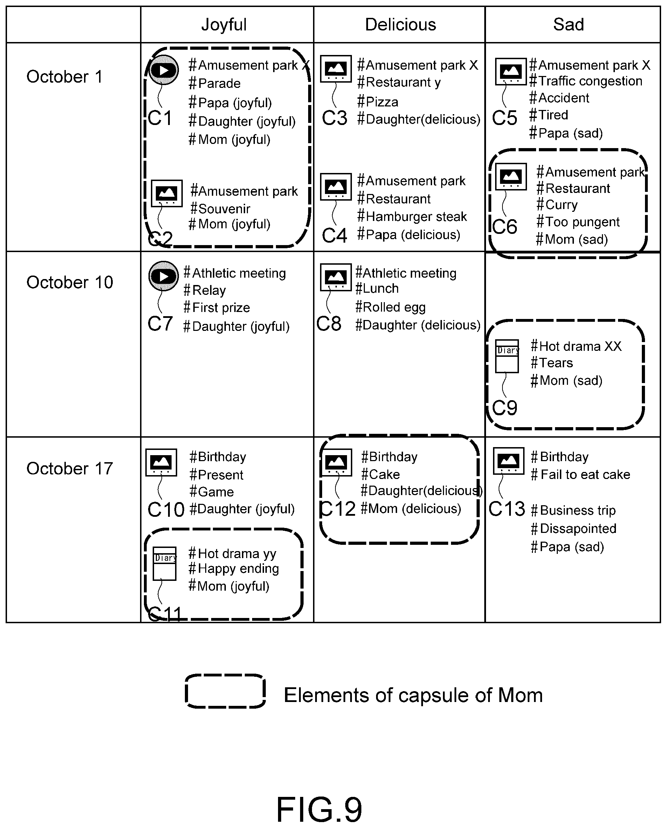

In addition, when (person: mom) is selected as the tag information for encapsulation, as shown in Fig. 9, a capsule in which the content data C1, C2, C6, C9, C11, and C12 are collected is generated. Similarly, when another person (papa, daughter) is selected as the tag information for encapsulation, a capsule in which the content data C4, C5, and C13 are collected or a capsule in which the content data C1, C3, C7, C8, C10, and C12 are collected is generated.

Further, when "moving image" is selected as the tag information for encapsulation, a capsule of a moving image in which the content data C1 and C7 are collected is generated. When "photograph" is selected, a capsule of a photograph in which the content data C2, C3, C4, C5, C6, C8, C10, C12, and C13 are collected is generated. When "diary" is selected, a capsule of a diary in which the content data C9 and C11 are collected is generated.

It is also possible to perform encapsulation with a plurality of pieces of tag information.

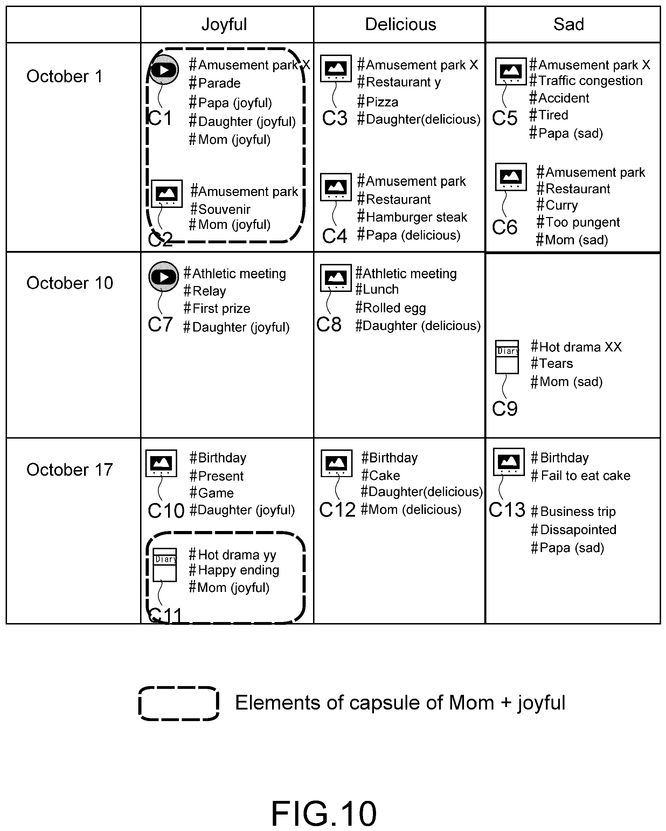

For example, when (person: mom) and (emotion: joyful) are selected as the tag information for encapsulation, as shown in Fig. 10, a capsule in which the content data C1, C2, and C11 are collected is generated, and when (person: daughter) and (emotion: delicious) are selected as the tag information for encapsulation, a capsule in which the content data C3, C8, and C12 are collected is generated.

As described above, according to this embodiment, in the content database generating apparatus 100, one or more pieces of tag information associated with each piece of content data are registered in the content DB 20, and in the content reproducing apparatus 200, one or more pieces of content data are collected to form a capsule by using the selected tag information, and are sequentially presented to the content presenting apparatus 30. If an event for switching the tag information of the content data to be reproduced is detected during the presentation of the capsule, a capsule in which one or more pieces of content data are recollected is generated and presented again by another tag information corresponding to the event. As a result, the theme of the content data presented to the user in the content viewing environment changes every moment depending on a change of the user, intuitive utterance, and the like, and the user can be given an opportunity to unexpectedly bring back memories that the user is forgetting.

In addition, since the content data collected using the tag information and sequentially presented may include general information obtained from the outside, such as news, weather information, and traffic congestion information, the memories can be viewed from another point of view. For example, the user can be given new information that expand the memories of the user, such as "The day when we went to the amusement park x was the day before the typhoon landed." and "We run into a big traffic congestion due to an accident on the highway on the day."

### <Modification 1>

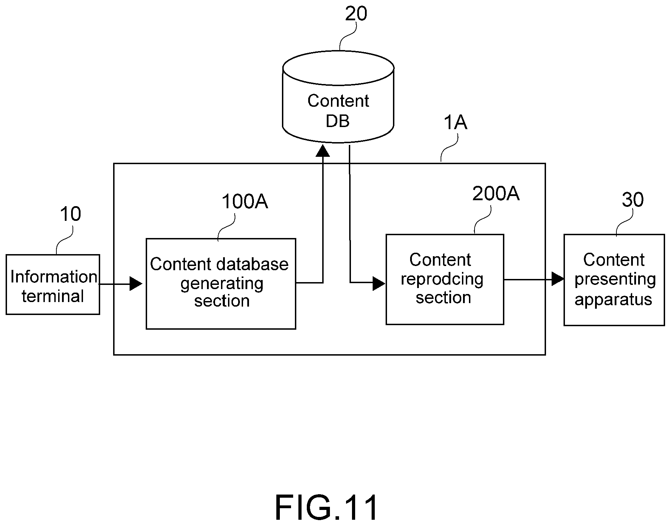

Although the embodiment of the information processing system 1 in which the content database generating apparatus 100 and the content reproducing apparatus 200 are separated has been described above, as shown in Fig. 11, a content database generating section 100A having the function of the content database generating apparatus 100 and a content reproducing section 200A having the function of the content reproducing apparatus 200 can also be configured by one information processing unit 1A.

Further, the information processing unit 1A may be configured by implementing the functions of the schedule managing section 11, the first image input section 12, the position information obtaining section 13, the first speech input section 14, the SNS receiving section 15, and the web information receiving section 16 (see Fig. 1) of the information terminal 10.

Alternatively, the information processing unit 1A may have the function of the content DB 20 and the function of the content presenting apparatus 30.

### (Reservation and Registration of Accompanying Person)

When an accompanying person is registered in the reservation information of the schedule managing section 11, it is possible to recognize the person from an image by the first image analyzing section 112 and to improve the accuracy with which the first speech analyzing section 114 estimates the person from the speech of the utterance.

Further, after completion of the schedule, it is possible to post content data such as moving images and photographs obtained on the day to the information terminal 10 of the accompanying person through the SNS, to exchange information such as feedback and the like, and to add a keyword extracted from the information such as feedback as new tag information for the content data in the content DB 20.

### (Automatic Diary Generation)

A simple diary can be automatically generated by identifying the content data to which the person name of the user of the diary is associated, extracting the content data and other tag information and web information associated with the content data from the content DB 20, and arranging those pieces of information in time series. The user can create a diary with a high degree of fulfillment by adding information, such as a new comment sentence input by a speech or the like, to the simple diary.

### (Diary Creation Using SNS Posted Details)

For example, when information with a hash tag is exchanged on the SNS between friends, the hash tag may be registered as a schedule name in the content DB 20 and managed together with data such as feedback and photographs exchanged on the SNS. As a result, it is possible to create and present a capsule in which data such as feedback and photographs exchanged on the SNS are collected as a simple diary.

### <Utilization of GNSS>

The location of the user may be identified from the location information registered in association with the content data in the content DB 20, and the location may be registered as the schedule name in the content DB 20 with respect to the peripheral content thereof.

For example, if an image of a situation where the user is playing with a friend in the park "a" is taken, the place of the user can be identified as the park "a" from the positional information. This park name may be registered as a schedule name in the content DB 20 in association with the photograph data. As a result, a capsule in which one or more pieces of photograph data are collected using the park name as tag information can be created and presented as an album of the park "a"

### (Data Correction of Content DB 20)

The content reproducing apparatus 200 is capable of changing tag information such as a keyword, an emotion, a schedule name, and a person registered in the content DB 20 to any information in response to a command input from the user.

Further, the content data to be encapsulated or the content data to be excluded from the capsule can be directly selected by the user by a speech or a menu operation.

The capsule generated by the content reproducing apparatus 200 may be exchanged with the content reproducing apparatus 200 of another user. As a result, the capsule can be associated with content data included in a capsule of another user, and the types and details of capsules are expanded.

### [Other Configurations of Present Technology]

Note that the present technology may also take the following configurations.
(1) An information processing system, including:
   a first information processing unit including a first arithmetic unit that generates, from information regarding a detected user and behavior of the user, one or more pieces of tag information for content data of the user, and registers the generated one or more pieces of tag information in a content database in association with the content data; and
   a second information processing unit including a second arithmetic unit that selects the tag information on the basis of information detected from a content viewing environment including the user, retrieves and sequentially reproduces one or more pieces of the content data on the basis of the selected tag information, and updates the tag information used for retrieving the content data in accordance with a change in the information detected from the viewing environment.
(2) The information processing system according to (1), in which
   the information regarding the detected user and the behavior of the user and the information detected from the content data viewing environment are person information recognized from a captured image including the user and emotion information estimated from a facial expression of the person.
(3) The information processing system according to (1) or (2), in which
   the information regarding the detected user and the behavior of the user and the information detected from the content data viewing environment are keywords extracted from details of utterance of the user.
(4) The information processing system according to any one of (1) to (3), in which
   the second arithmetic unit of the second information processing unit sequentially reproduces one or more pieces of the content data when detecting that the user is present in the content viewing environment.
(5) The information processing system according to (4), in which
   the second arithmetic unit of the second information processing unit randomly selects and sequentially reproduces one or more pieces of the content data.
(6) The information processing system according to any one of (1) to (5), in which
   the second arithmetic unit of the second information processing unit updates the tag information used for retrieving the content data in accordance with a change of the user in the content viewing environment or a change of a combination of users.
(7) The information processing system according to (6), in which
   the second arithmetic unit of the second information processing unit updates the tag information with a name of a user after the change of the content viewing environment.
(8) The information processing system according to any one of (1) to (5), in which
   the second arithmetic unit of the second information processing unit updates the tag information used for retrieving the content data in accordance with a change of a facial expression of the user in the content viewing environment.
(9) The information processing system according to (8), in which
   the second arithmetic unit of the second information processing unit updates the tag information with emotion information estimated from the facial expression of the user after the change.
(10) The information processing system according to any one of (1) to (5), in which
   the second arithmetic unit of the second information processing unit updates the tag information used for retrieving the content data in accordance with a change in magnitude and speed of a motion of the user in the content viewing environment.
(11) The information processing system according to any one of (1) to (5), in which
   the second arithmetic unit of the second information processing unit updates the tag information used for retrieving the content data in accordance with a keyword extracted from utterance of the user in the content viewing environment.
(12) The information processing system according to any one of (1) to (11), in which
   the second arithmetic unit of the second information processing unit adds, to the content database, a new keyword extracted from utterance of the user in the content viewing environment as new tag information for the content data being presented.
(13) The information processing system according to any one of (1) to (12), in which
   the second arithmetic unit of the second information processing unit receives a speech command from the user in the content viewing environment, recognizes the user, sequentially reproduces one or more pieces of the content data associated with schedule information of the user and person information identifying the user, converts a feedback speech from the user into text data, and stores the text data as diary data.
(14) An information processing apparatus, including
   an arithmetic unit that
   generates, from information regarding a detected user and behavior of the user, one or more pieces of tag information for content data of the user, and registers the generated one or more pieces of tag information in a content database in association with the content data, and
   selects the tag information on the basis of information detected from a content viewing environment including the user, retrieves and sequentially reproduces one or more pieces of the content data on the basis of the selected tag information, and updates the tag information used for retrieving the content data in accordance with a change in the information detected from the viewing environment.
(15) An information processing method, including:
   generating, from information regarding a detected user and behavior of the user, one or more pieces of tag information for content data of the user, and registering the generated one or more pieces of tag information in a content database in association with the content data; and
   selecting the tag information on the basis of information detected from a content viewing environment including the user, retrieving and sequentially reproducing one or more pieces of the content data on the basis of the selected tag information, and updating the tag information used for retrieving the content data in accordance with a change in the information detected from the viewing environment.

In addition, the present technology is not limited to the embodiment described above, and various modifications may be made thereto without departing from the scope of the present technology.

### Reference Signs List

- C1 to C13: content data
- T1 to T6: capsule
- 1: information processing system
- 1A: information processing unit
- 10: information terminal
- 20: content database
- 30: content presenting apparatus
- 100: content database generating apparatus
- 110: information analyzing section
- 111: schedule information analyzing section
- 112: first image analyzing section
- 113: behavior analyzing section
- 114: first speech analyzing section
- 115: SNS analyzing section
- 116: web information analyzing section
- 120: tag information generating section
- 200: content reproducing apparatus
- 201: second image input section
- 202: second image analyzing section
- 203: second speech input section
- 204: second speech analyzing section
- 205: content control section

## Claims

1. An information processing system, comprising:
a first information processing unit including a first arithmetic unit that generates, from information regarding a detected user and behavior of the user, one or more pieces of tag information for content data of the user, and registers the generated one or more pieces of tag information in a content database in association with the content data; and
a second information processing unit including a second arithmetic unit that selects the tag information on a basis of information detected from a content viewing environment including the user, retrieves and sequentially reproduces one or more pieces of the content data on a basis of the selected tag information, and updates the tag information used for retrieving the content data in accordance with a change in the information detected from the viewing environment.

2. The information processing system according to claim 1, wherein
the information regarding the detected user and the behavior of the user and the information detected from the content data viewing environment are person information recognized from a captured image including the user and emotion information estimated from a facial expression of the person.

3. The information processing system according to claim 1, wherein
the information regarding the detected user and the behavior of the user and the information detected from the content data viewing environment are keywords extracted from details of utterance of the user.

4. The information processing system according to claim 1, wherein
the second arithmetic unit of the second information processing unit sequentially reproduces one or more pieces of the content data when detecting that the user is present in the content viewing environment.

5. The information processing system according to claim 4, wherein
the second arithmetic unit of the second information processing unit randomly selects and sequentially reproduces one or more pieces of the content data.

6. The information processing system according to claim 1, wherein
the second arithmetic unit of the second information processing unit updates the tag information used for retrieving the content data in accordance with a change of the user in the content viewing environment or a change of a combination of users.

7. The information processing system according to claim 6, wherein
the second arithmetic unit of the second information processing unit updates the tag information with a name of a user after the change of the content viewing environment.

8. The information processing system according to claim 1, wherein
the second arithmetic unit of the second information processing unit updates the tag information used for retrieving the content data in accordance with a change of a facial expression of the user in the content viewing environment.

9. The information processing system according to claim 8, wherein
the second arithmetic unit of the second information processing unit updates the tag information with emotion information estimated from the facial expression of the user after the change.

10. The information processing system according to claim 1, wherein
the second arithmetic unit of the second information processing unit updates the tag information used for retrieving the content data in accordance with a change in magnitude and speed of a motion of the user in the content viewing environment.

11. The information processing system according to claim 1, wherein
the second arithmetic unit of the second information processing unit updates the tag information used for retrieving the content data in accordance with a keyword extracted from utterance of the user in the content viewing environment.

12. The information processing system according to claim 1, wherein
the second arithmetic unit of the second information processing unit adds, to the content database, a new keyword extracted from utterance of the user in the content viewing environment as new tag information for the content data being presented.

13. The information processing system according to claim 1, wherein
the second arithmetic unit of the second information processing unit receives a speech command from the user in the content viewing environment, recognizes the user, sequentially reproduces one or more pieces of the content data associated with schedule information of the user and person information identifying the user, converts a feedback speech from the user into text data, and stores the text data as diary data.

14. An information processing apparatus, comprising
an arithmetic unit that
generates, from information regarding a detected user and behavior of the user, one or more pieces of tag information for content data of the user, and registers the generated one or more pieces of tag information in a content database in association with the content data, and
selects the tag information on a basis of information detected from a content viewing environment including the user, retrieves and sequentially reproduces one or more pieces of the content data on a basis of the selected tag information, and updates the tag information used for retrieving the content data in accordance with a change in the information detected from the viewing environment.

15. An information processing method, comprising:
generating, from information regarding a detected user and behavior of the user, one or more pieces of tag information for content data of the user, and registering the generated one or more pieces of tag information in a content database in association with the content data; and
selecting the tag information on a basis of information detected from a content viewing environment including the user, retrieving and sequentially reproducing one or more pieces of the content data on a basis of the selected tag information, and updating the tag information used for retrieving the content data in accordance with a change in the information detected from the viewing environment.
